# EUROPÄISCHE PATENTSCHRIFT

(11) **EP 4 577 433 B1**
(45) Veröffentlichungstag und Bekanntmachung des Hinweises auf die Patenterteilung: **25.11.2026**
(21) Anmeldenummer: 23761087.8
(22) Anmeldetag: 18.08.2023
(51) Int. Cl.: B60T 8/1755, B60T 8/1766, B60T 8/88

(54) **VERFAHREN ZUR BETÄTIGUNG VON ELEKTRONISCH GESTEUERTEN BREMSEN EINES NUTZFAHRZEUGS**
METHOD FOR ACTUATING ELECTRONICALLY CONTROLLED BRAKES OF A UTILITY VEHICLE
PROCÉDÉ D'ACTIONNEMENT DE FREINS À COMMANDE ÉLECTRONIQUE D'UN VÉHICULE UTILITAIRE

(30) Priorität: 25.08.2022 DE 102022121565
(43) Veröffentlichungstag der Anmeldung: 02.07.2025
(73) Patentinhaber: Haldex AB, 26124 Landskrona (SE)
(72) Erfinder: DRENTH, Edo Frederik, 25671 Helsingborg (SE); MARZBANRAD, Alireza, 417 65 Göteborg (SE); NILSSON, Kristoffer, 22731 Lund (SE)
(74) Vertreter: Müller Schupfner & Partner Patent- und Rechtsanwaltspartnerschaft mbB (Muc)
(86) Internationale Anmeldenummer: PCT/EP2023/072778
(87) Internationale Veröffentlichungsnummer: WO 2024/041990

(56) Entgegenhaltungen:
- EP-A2- 1 894 799
- WO-A1-2020/249185
- WO-A1-2021/028455
- DE-A1- 102020 131 688
- KR-A- 20190 058 100
- US-A1- 2020 180 687

## Beschreibung

### TECHNISCHES GEBIET DER ERFINDUNG

Die Erfindung betrifft ein Verfahren zum Betrieb eines Bremssystems eines Nutzfahrzeugs mit elektronisch gesteuerten Bremsen, wobei das Verfahren einem möglichen oder bereits auftretenden Fehler in einer Radbremseinheit eines gelenkten Fahrzeugrades während eines Bremsvorgangs Rechnung trägt. Während grundsätzlich auch möglich ist, dass es sich bei dem Bremssystem um ein elektro-pneumatisch gesteuertes Bremssystem handelt, ist das Bremssystem vorzugsweise als elektromechanische Bremse (gebräuchliche Abkürzung auch "EMB") ausgebildet.

### STAND DER TECHNIK

DE 10 2020 131 688 A1 offenbart ein Bremssystem eines Nutzfahrzeugs mit elektronisch gesteuerten Bremsen, wobei hier die Radbremseinheiten elektro-pneumatisch ausgebildet sind. Das Bremssystem verfügt über eine Steuereinrichtung mit Steuerlogik, die analysiert und detektiert, ob ein Fehler bei der elektronischen Aussteuerung des pneumatischen Bremsdrucks an einer Radbremseinheit auftritt oder möglich ist. Bei einer derartigen Detektierung eines möglichen oder auftretenden Fehlers deaktiviert die Radbremseinheit die zugeordnete Bremse durch Entlüftung des Bremsaktuators. Gleichzeitig erhöht die Steuereinrichtung mit der Steuerlogik das Bremsmoment an den Radbremseinheiten der anderen Fahrzeugräder, um zumindest teilweise den Verlust der Bremskraft in Folge des Fehlers zu kompensieren. Für die Art der Erhöhung der Bremskraft an den anderen Fahrzeugrädern offenbart die DE 10 2020 131 688 A1 folgende Möglichkeiten:
- Für eine erste Variante wird das entfallende Bremsmoment gleichmäßig auf alle anderen Bremsräder verteilt.
- Für eine (alternative oder kumulative) Variante kann die Erhöhung des Bremsmoments an den anderen Fahrzeugrädern unter Berücksichtigung der Traktionsverhältnisse und/oder eines Radschlupfes an den Fahrzeugrädern erfolgen. So kann beispielsweise eine größere Erhöhung der Bremskraft an einem Fahrzeugrad erfolgen, an dem eine besonders hohe Reibung zwischen Fahrzeugrad und Fahrbahn erzeugt werden kann, beispielsweise infolge einer sehr hohen Radlast dieses Fahrzeugrads und/oder einem Zustand der Fahrbahn, der zu einem hohen Reibkoeffizienten führt. Ist bereits mittels eines Raddrehzahlsensors erkannt worden, dass an einem Fahrzeugrad ein Radschlupf existiert, sollte bevorzugt eine Erhöhung des Bremsmomentes nicht an diesem Fahrzeugrad, sondern an mindestens einem anderen Fahrzeugrad erfolgen.
- Für eine (alternative oder kumulative) Variante wird die Erhöhung des an den Fahrzeugrädern erzeugten Bremsmoments in Abhängigkeit von der Fahrgeschwindigkeit vorgenommen. So kann beispielsweise nur für Geschwindigkeiten des Nutzfahrzeugs oberhalb eines Schwellwerts, von denen ein größeres Gefahrenpotential im Fall eines Unfalls ausgeht, eine Verteilung des Bremsmoments an die anderen Fahrzeugräder erfolgen, oder das Ausmaß der Verteilung hängt von der Geschwindigkeit ab. Es ist aber auch eine umgekehrte Berücksichtigung der Abhängigkeit von der Fahrgeschwindigkeit möglich.
- Für eine (alternative oder kumulative) Variante erfolgt die Erhöhung des an den anderen Fahrzeugrädern erzeugten Bremsmoments in Abhängigkeit von einem Lenkwinkel. So kann beispielsweise für den Fall, dass keine Lenkungsvorgabe erfolgt und das Nutzfahrzeug geradeaus fahren soll, eine größere Erhöhung des an den anderen Fahrzeugrädern erzeugten Bremsmoments erfolgen, da ein hierdurch bedingter etwaiger Schlupf nicht unmittelbar zu einer Abweichung der Bewegung des Nutzfahrzeugs von der durch die Lenkung vorgegebenen Bahn erfolgt, während mit Vergrößerung des Lenkwinkels die Verteilung des Bremsmoments an die anderen Fahrzeugräder kleiner wird oder gänzlich unterbleibt.
- Möglich ist auch, dass eine Verteilung des Bremsmoments nicht auf Fahrzeugräder erfolgt, die gelenkt sind, sondern lediglich auf nicht gelenkte Fahrzeugräder.
- Des Weiteren möglich ist, dass die Erhöhung des an den anderen Fahrzeugrädern erzeugten Bremsmoments in Abhängigkeit von einer Anforderung des Fahrers erfolgt.
- Schließlich ist auch möglich, dass die Erhöhung des an den anderen Fahrzeugrädern erzeugten Bremsmoments unter Berücksichtigung der dynamischen Fahrstabilität und der dynamischen Bedingungen, also unter Berücksichtigung eines Rollwinkels, eines Gierwinkels und/oder eines Nickwinkels, erfolgt.

Für die Ausgestaltung des Bremssystems als elektro-pneumatisches Bremssystem gemäß DE 10 2020 131 688 A1 wird eine derartige Umverteilung des Bremsmoments gewährleistet durch redundante pneumatische Leitungen und zugeordnete Redundanzventile.

DE 10 2008 000 764 A1 offenbart ein Verfahren zur Kompensation eines Ausfalls einer Radbremseinheit eines mehrere Radbremseinheiten aufweisenden Bremssystems eines Kraftfahrzeugs, wobei das Bremssystem als dezentrales elektrisches Bremssystem ausgebildet ist. Im Normalbetrieb erfolgt eine Aufteilung einer Gesamtbremsmomentanforderung auf die einzelnen Radbremseinheiten. Erzeugt eine Radbremseinheit nicht den vorbestimmten Teil des Gesamtbremsmomentes, sondern überhaupt kein Bremsmoment oder lediglich ein reduziertes Bremsmoment, wird das fehlende Bremsmoment der fehlerhaften Radbremseinheit teilweise oder vollständig auf die anderen Radbremseinheiten verteilt. Hierbei kann die neue Verteilung das verbleibende Bremsmomentenpotential der verbleibenden funktionsfähigen Radbremseinheiten berücksichtigen. Das Bremsmomentenpotential kann dabei mittels einer Raddrehzahl, fahrzeugspezifischen Parametern und/oder einer kritischen Schlupfgrenze der Räder ermittelt werden. Möglich ist auch, dass die Neuverteilung der Gesamtbremsmomentenanforderung derart erfolgt, dass ein Giermoment um eine Hochachse des Kraftfahrzeugs zumindest teilweise oder vollständig verhindert wird. Ist eine Neuverteilung, bei der ein Giermoment vollständig verhindert wird, nicht möglich, wird die Gesamtbremsmomentenanforderung zunächst reduziert und dann langsam erhöht, um das verbleibende Giermoment nicht abrupt zu erzeugen, sondern dieses langsam aufzubauen. Verfügt das Kraftfahrzeug über ein automatisches Lenksystem, kann ein nicht ausgleichbares, in Folge der Neuverteilung resultierendes Giermoment durch einen automatischen Lenkeingriff des automatisierten Lenksystems ausgeglichen werden. Die Fehlererkennung, anhand welcher eine neue Verteilung der Gesamtbremsmomentanforderung erfolgt, basiert auf einem Vergleich der Soll-Bremsmomente und der Ist-Bremsmomente der Radbremseinheiten, wobei die Ist-Bremsmomente auch anhand anderer gemessener Größen ermittelt oder modelbasiert bestimmt werden können.

DE 196 80 595 B4 offenbart einen Fahrdynamikregler für ein Fahrzeug, bei dem mittels eines Sensors eine Giergeschwindigkeit eines Fahrzeugs erfasst wird. Die Bremsmomente an den Fahrzeugrädern werden dann so verteilt, dass einer Abweichung einer gemessenen Ist-Giergeschwindigkeit von einer Soll-Giergeschwindigkeit entgegengewirkt wird.

Weiterer Stand der Technik ist aus DE 103 40 629 A1 und US 2005/0057095 A1 bekannt.

WO 2020/249185 A1 offenbart ein Verfahren zum Schätzen einer Längskraftdifferenz, die auf die Räder der gelenkten Achse eines Fahrzeugs wirkt, wobei das Verfahren umfasst: Erhalten von Daten aus dem Fahrzeug, die sich auf ein angelegtes Lenkdrehmoment beziehen, das mit den Rädern der gelenkten Achse verbunden ist erhalten werden, einen mit den Rädern der gelenkten Achse verbundenen Nachlaufwert erhalten wird und die Längskraftdifferenz auf der Grundlage der erhaltenen Daten und des Nachlaufs als proportional zum ausgeübten Lenkmoment und als umgekehrt proportional zum Nachlauf.

WO 2021/028455 A1 offenbart ein Verfahren zum Steuern eines Fahrzeuges bei einer unerwarteten Bremsung mit seitenweise unterschiedlich wirkenden Bremskräften an einer lenkbaren Fahrzeugachse.

US 2020/180687 A1 offenbart ein Verfahren und System korrigieren die Lenkung eines Fahrzeugs bei einer Fehlfunktion des Bremssystems. Das Bremssystem hat einen diagonalen Split-Aufbau. Ein elektronisches Bremssystem (EBS) steuert den Betrieb desHauptbremszylinders. Ein elektronisches Servolenkungssystem (EPS) umfasst Sensoren zur Messung der Bewegung und des Drehmoments einer Lenksäule des Fahrzeugs und umfasst einen Motor, um Drehmoment auf die Lenksäule auszuüben.

### AUFGABE DER ERFINDUNG

Der Erfindung liegt die Aufgabe zugrunde, ein Verfahren zur Betätigung von elektronisch gesteuerten Bremsen eines Nutzfahrzeugs so weiterzubilden, dass sich verbesserte Reaktionsmöglichkeiten auf Beeinträchtigungen der Funktionsfähigkeit einer Radbremseinheit eines gelenkten Fahrzeugrads ergeben und/oder die Gefahr von instabilen Fahrsituationen infolge eines Fehlers einer Radbremseinheit reduziert wird.

### LÖSUNG

Die Aufgabe der Erfindung wird erfindungsgemäß mit den Merkmalen des unabhängigen Patentanspruchs 1 bzw. der unabhängigen Ansprüche 1 und 2 gelöst. Weitere bevorzugte erfindungsgemäße Ausgestaltungen sind den abhängigen Patentansprüchen zu entnehmen.

### BESCHREIBUNG DER ERFINDUNG

Die vorliegende Erfindung beruht auf der Erkenntnis, dass eine Verteilung der Bremskraft von einem gelenkten Fahrzeugrad an die Radbremseinheiten der Fahrzeugräder anderer Achsen problematisch sein kann. Fällt das Bremsmoment an dem gelenkten Fahrzeugrad, dessen Radbremseinheit den Fehler aufweist, zumindest teilweise weg, führt das Bremsmoment an dem anderen gelenkten Fahrzeugrad dazu, dass ein Giermoment auf das Nutzfahrzeug wirkt, welches eine Gierwinkeländerung zur Folge haben kann, womit das Nutzfahrzeug die vorbestimmte Bahn verlassen kann und im Extremfall eine Instabilität der Bewegung des Nutzfahrzeugs hervorgerufen wird. Ein etwaiges Stabilitätsprogramm des Nutzfahrzeugs reagiert dann unter Umständen mit der Aussteuerung einer Erhöhung des Bremsmoments an dem Fahrzeugrad, an dem die Radbremseinheit den Fehler aufweist, womit der Steuereingriff des Stabilitätsprogramms wirkungslos sein kann. Andererseits erfordert die Verlagerung des Bremsmoments der defekten Radbremseinheit zu Radbremseinheiten der Fahrzeugräder der mindestens einen anderen Achse, dass die Traktionsverhältnisse an der anderen Achse überhaupt eine Erhöhung des Bremsmoments ermöglichen. Erfolgt ohnehin eine Abbremsung des Nutzfahrzeugs, erfolgt infolge der Verzögerung eine Erhöhung der Radlast an den gelenkten Fahrzeugrädern der Vorderachse, während die Fahrzeugräder der mindestens einen anderen hinteren Achse entlastet werden, so dass die Möglichkeit der Übernahme eines Bremsmoments an diesen Fahrzeugrädern sehr begrenzt ist. Eine weitere Verringerung der hinteren Achslast und damit des Potentials für eine Übernahme eines Bremsmoments an den nicht gelenkten, hinteren Fahrzeugrädern ergibt sich, wenn das Nutzfahrzeug nicht beladen ist und/oder an dem Nutzfahrzeug ein Anhänger angehängt ist, wobei dann über die Kopplungseinrichtung zwischen dem Nutzfahrzeug und dem Anhänger eine Kopplungskraft wirken kann, die zu einer Erhöhung der Radlast an den gelenkten Fahrzeugrädern der Vorderachse führen kann und eine Reduzierung der Radlast an den Fahrzeugrädern der hinteren Achse(n) zur Folge haben kann.

Ohne dass die erfindungsgemäße Ausgestaltung auf die Behandlung und/oder Beseitigung der geschilderten Problematik eingeschränkt sein soll, schlägt die Erfindung ein Verfahren zur Betätigung von elektronisch gesteuerten Bremsen eines Nutzfahrzeugs vor. Das Nutzfahrzeug verfügt dabei über eine erste Radbremseinheit und eine zweite Radbremseinheit. Die erste Radbremseinheit und die zweite Radbremseinheit sind gelenkten Fahrzeugrädern einer Vorderachse zugeordnet und dienen jeweils der Erzeugung eines Bremsmoments an diesen gelenkten Fahrzeugrädern. Das Bremssystem des Nutzfahrzeugs verfügt darüber hinaus über eine dritte Radbremseinheit und eine vierte Radbremseinheit, die Fahrzeugrädern mindestens einer weiteren Achse zugeordnet sind, wobei es sich vorzugsweise um eine hintere Achse und nicht gelenkte Fahrzeugräder handelt. Es versteht sich, dass zusätzlich zu der dritten Radbremseinheit und der vierten Radbremseinheit auch weitere Radbremseinheiten vorhanden sein können, wenn das Fahrzeug über mehr als zwei Achsen verfügt.

In dem erfindungsgemäßen Verfahren erfolgt eine Überwachung eines Fehlerkriteriums hinsichtlich der Funktionsfähigkeit der ersten Radbremseinheit und der zweiten Radbremseinheit. Dieses Überwachen des Fehlerkriteriums erfolgt vorzugsweise während der Beaufschlagung der ersten und zweiten Radbremseinheit mit Bremsmomenten. Hierbei kann das Fehlerkriterium einen bereits auftretenden Fehler indizieren. So kann beispielsweise eine Messung des Bremsmoments oder einer Anpresskraft eines Bremsbelags an eine Bremsscheibe, eines Beaufschlagungswegs des Bremsbelags in der Radbremseinheit oder eines beliebigen Getriebeelements in der Radbremseinheit oder eines Aktuators der Radbremseinheit gemessen werden und mit einem Vorgabe- oder Sollwert verglichen werden. Ist eine Abweichung größer als ein Schwellwert, kann auf das Vorliegen eines Fehlers geschlossen werden. Ein weiteres mögliches Fehlerkriterium kann die Funktionsfähigkeit des Aktuators oder eines Bauelements der Radbremseinheit oder eines Sensors der Radbremseinheit, beispielsweise eines Raddrehzahlsensors des Fahrzeugrads, welcher für die Regelung des Schlupfes dieses Fahrzeugrads verantwortlich ist, sein. Auch möglich ist, dass als Fehlerkriterium ein Energieniveau der Leistungsversorgung der Radbremseinheit überwacht wird. Handelt es sich bei Radbremseinheit um eine elektromechanische Bremse, kann als Fehlerkriterium das Energieniveau eines Akkumulators oder einer Kapazität zur elektrischen Leistungsversorgung der elektromechanischen Bremse verwendet werden. Möglich ist auch, dass eine Mehrzahl der zuvor erläuternden Fehlerkriterien gemeinsam ausgewertet wird, wobei auch eine Gewichtung einzelner Fehlerkriterien erfolgen kann, auf Grundlage welcher dann auf die Funktionsfähigkeit der ersten Radbremseinheit geschlossen wird. Das Fehlerkriterium kann dabei eine Verringerung des Bremsmoments der Radbremseinheit gegenüber der Vorgabe oder ein vollständiger Entfall des Bremsmoments sein oder diesen indizieren. Möglich ist aber auch, dass das Fehlerkriterium ein Indiz für einen möglichen zukünftigen Ausfall der Radbremseinheit oder für eine aktuelle oder zukünftige Reduzierung des Funktionsumfangs der Radbremseinheit ist. Die vorgenannten Beispiele für die Auswertung und Überwachung des Fehlerkriteriums sind lediglich beispielhaft, ohne dass die Erfindung auf diese Beispiele beschränkt sein soll.

Liegt ein Fehlerkriterium der ersten Radbremseinheit vor, kann im Rahmen der Erfindung das Bremsmoment der ersten Radbremseinheit vollständig beseitigt werden oder ein infolge des Fehlers reduziertes Bremsmoment der ersten Radbremseinheit wird beibehalten oder gezielt ausgesteuert.

**Im Fall** des Vorliegens des Fehlerkriteriums der ersten Radbremseinheit wird in dem erfindungsgemäßen Verfahren das Bremsmoment der zweiten Radbremseinheit und/oder dritten Radbremseinheit und/oder vierten Radbremseinheit derart gesteuert oder geregelt, dass ein eine Betriebsanforderung gewährleistender Gierwinkelparameter erzeugt wird. Bei dem die Betriebsanforderung gewährleistenden Gierwinkelparameter kann es sich beispielsweise um einen Gierwinkel oder eine Gierwinkeländerung handeln, der die Betriebsanforderung gewährleistet, dass sich das Nutzfahrzeug entsprechend einer vorbestimmten Bahn bewegt. Diese Bahn kann beispielsweise mit dem Ziel gesteuert oder geregelt werden, dass sich die Bahn infolge des vorliegenden Fehlers der ersten Radbremseinheit nicht verändert, womit also eine Steuerung oder Regelung der Bremsmomente der Radbremseinheiten derart erfolgt, dass sich keine Änderung des Gierwinkels oder keine Gierwinkeländerung ergibt. Hierzu kann eine Steuerung oder Regelung des Bremsmoments der zweiten Radbremseinheit, der dritten Radbremseinheit und der vierten Radbremseinheit so erfolgen, dass ein Giermoment, welches sich aus der Reduzierung oder dem Entfall des Bremsmoments an der ersten Radbremseinheit infolge des Fehlers ergibt, kompensiert wird um ein Giermoment, welches denselben Betrag hat, aber ein entgegengesetztes Vorzeichen hat und infolge der unterschiedlichen Bremsmomente an der zweiten Radbremseinheit, der dritten Radbremseinheit und der vierten Radbremseinheit entsteht. Um ein anderes Beispiel für die erfindungsgemäße Steuerung oder Regelung zu nennen, kann eine Steuerung oder Regelung der Bremsmomente der zweiten Radbremseinheit, der dritten Radbremseinheit und der vierten Radbremseinheit derart erfolgen, dass ein Gierwinkelparameter, insbesondere ein Gierwinkel und/oder eine Gierwinkeländerung, erzeugt wird, der korreliert mit dem Kurvenradius einer kurvenförmigen Bahn des Nutzfahrzeugs, beispielsweise wenn sich das Nutzfahrzeug durch eine Kurve bewegen soll oder ein automatisches Kollisionsvermeidungssystem eine kurvenförmige Bahn vorgibt, damit zur Vermeidung einer Kollision das Nutzfahrzeug ein Hindernis seitlich passieren kann.

Die Erfindung schlägt für eine alternative oder kumulative Lösung vor, dass bei dem Vorliegen des Fehlerkriteriums der ersten Radbremseinheit ein automatisch betätigbarer Lenkungsstrang derart gesteuert oder geregelt wird, dass ein eine Bremsanforderung gewährleistender Lenkwinkelparameter des Lenkungsstrangs erzeugt wird. Dieser Ausgestaltung liegt beispielsweise die Erkenntnis zugrunde, dass bei einem u. U. schlagartigen Entfall des Bremsmoments an der ersten Radbremseinheit eine Beaufschlagung des Lenkungsstrangs mit einem Lenkmoment mit einer Sprungfunktion oder einem Impuls zur Folge hat, das beispielsweise von dem Fahrer an dem Lenkrad spürbar ist und zu einer ungewünschten Veränderung des Lenkwinkels führen kann. Ist der Lenkungsstrang automatisch betätigbar mittels eines Aktuators, kann einem derartigen sprungartigen oder impulsartigen, auf den Lenkungsstrang wirkenden Lenkmoment durch Ansteuerung des Aktuators zumindest teilweise entgegengewirkt werden. Um lediglich einige die Erfindung nicht beschränkende Beispiele zu nennen, kann der Aktuator auf den Lenkungsstrang ein entgegengesetztes entsprechendes Ausgleichsmoment ausüben. Für dieses Beispiel ist der die Betriebsanforderung gewährleistende Lenkwinkelparameter, dass sich infolge des Fehlers der ersten Radbremseinheit eine Betriebsstellung des Lenkungsstrangs nicht oder nur innerhalb vorbestimmter Grenzen ändert oder eine Änderungsgeschwindigkeit innerhalb vorbestimmter Grenzen bleibt. Alternativ oder kumulativ möglich ist, dass der Aktuator die Relativlage zwischen den gelenkten Fahrzeugrädern und dem Lenkrad verändert. Für diese Ausführungsform trägt der ausgesteuerte Lenkwinkel der gelenkten Fahrzeugräder dafür Sorge, dass eine Gierwinkeländerung, die infolge des Entfalls des Bremsmoments an der ersten Radbremseinheit entsteht, zumindest teilweise kompensiert wird, indem automatisch eine kompensierende Gegen-Lenkbewegung erzeugt wird. In diesem Fall ist somit der die Betriebsanforderung gewährleistende Lenkwinkelparameter ein Lenkwinkel, der zumindest teilweise eine Änderung des Gierwinkels oder der Gierwinkeländerung infolge des Entfalls der ersten Radbremseinheit kompensiert.

Erfindungsgemäß erfolgt bei Vorliegen des Fehlerkriteriums der ersten Radbremseinheit in dem erfindungsgemäßen Verfahren eine Reduktion des Bremsmoments der zweiten Radbremseinheit. Wird in dem Verfahren gezielt das Bremsmoment der ersten Radbremseinheit auf Null reduziert, kann das Bremsmoment der zweiten Radbremseinheit ebenfalls auf Null reduziert werden oder es verleibt ein verringertes Bremsmoment an der zweiten Radbremseinheit. Wird hingegen trotz des aufgetretenen Fehlers weiterhin an der ersten Radbremseinheit ein reduziertes Bremsmoment erzeugt, kann das Bremsmoment an der zweiten Radbremseinheit in demselben Ausmaß oder einem kleineren oder größeren Ausmaß reduziert werden.

Erfindungsgemäß wird aber vor der Reduzierung des Bremsmoments der zweiten Radbremseinheit, gleichzeitig mit oder unmittelbar nach dieser Reduzierung das Bremsmoment der dritten und/oder vierten Radbremseinheit erhöht, um im Idealfall die Summe der Bremsmomente an sämtlichen Fahrzeugrädern konstant zu halten oder eine Verringerung des resultierenden gesamten Bremsmoments möglichst klein zu halten. Die Erhöhung der Bremsmomente der dritten und/oder vierten Radbremseinheit kann dabei in gleichem oder unterschiedlichem Ausmaß erfolgen. Vorzugsweise erfolgt die Erhöhung der Bremsmomente der dritten und/oder vierten Radbremseinheiten unter einer Stabilitätskontrolle, wobei vorzugsweise ein mittels den wirkenden Bremsmomenten erzeugtes Giermoment angepasst ist, um die von dem Fahrer oder einem Fahrsystem vorgegebene Bahn des Nutzfahrzeugs beizubehalten oder nur innerhalb vorbestimmter Grenzen zu verlassen. Die Reduzierung des Bremsmoments der zweiten Radbremseinheit hat zur Folge, dass der destabilisierende Effekt eines Bremsmoments der zweiten Radbremseinheit in Folge der Reduzierung oder des Entfalls des Bremsmoments an der ersten Radbremseinheit reduziert werden kann, womit die Fahrstabilität erhöht werden kann.

Erfindungsgemäß erfolgt anschließend an die Reduzierung des Bremsmoments an der zweiten Radbremseinheit und der Erhöhung des Bremsmoments an der dritten und/oder vierten Radbremseinheit eine Reduzierung des Bremsmoments an der dritten und/oder vierten Radbremseinheit.

Während einer Verlagerung von Bremsmomenten
- von der zweiten Radbremseinheit zu der dritten und/oder vierten Radbremseinheit und/oder
- in umgekehrter Richtung
kann einer unerwünschten Veränderung des Gierwinkels infolge der Übertragung einerseits durch gezielte Anpassung der Bremsmomente an den unterschiedlichen verbleibenden Radbremseinheiten und auf den unterschiedlichen Seiten des Nutzfahrzeugs Rechnung getragen werden. Alternativ oder kumulativ kann für den Fall, dass das Nutzfahrzeug über einen automatisch betätigbaren Lenkungsstrang verfügt, eine unerwünschte Veränderung des Gierwinkels durch automatische Erzeugung eines entgegengerichteten Lenkmoments in dem Lenkungsstrang zumindest reduziert werden.

Die Reduzierung der Bremsmomente an den gelenkten Fahrzeugrädern erfolgt im Gegensatz zu dem eingangs genannten Stand der Technik für einen Vorschlag der Erfindung lediglich temporär. Anschließend an diese Reduzierung des Bremsmoments der zweiten Radbremseinheit und die Erhöhung der Bremsmomente der dritten und/oder vierten Radbremseinheit (also in einem zeitlich unmittelbar anschließenden Verfahrensschritt oder nach einer Totzeit von 0,1 s, 0,2 s, 0,5 s, 0,8 s, 1,0 s, 2,0 s, um lediglich einige nicht beschränkende Beispiele zu nennen), erfolgt eine (Rück-)Übertragung eines Teils der Bremsmomente der dritten und/oder vierten Radbremseinheit an die zweite Radbremseinheit, also zurück an ein gelenktes Fahrzeugrad der Vorderachse. Hierbei kann der zurück übertragene Teil der Bremsmomente der vorherigen Erhöhung der Bremsmomente der dritten und/oder vierten Radbremseinheit entsprechen oder größer oder kleiner sein als diese.

Die erfindungsgemäße Ausgestaltung kann also einerseits durch die Reduzierung des Bremsmoments der zweiten Radbremseinheit in dem Defektfall der ersten Radbremseinheit die Erzeugung eines unerwünschten Giermoments durch die zweite Radbremseinheit vermeiden oder zumindest reduzieren, wobei dann anschließend dennoch eine Verzögerung des Nutzfahrzeugs mittels der noch intakten zweiten Radbremseinheit erzeugt werden kann. Dies ist insbesondere von Vorteil, wenn sich die Fahrzeugräder der dritten und/oder vierten Radbremseinheit bereits in der Nähe der Traktionsgrenze befinden, das Nutzfahrzeug nicht beladen ist, das Nutzfahrzeug gemeinsam mit einem Anhänger gebremst wird oder in Folge der Abbremsung die Achslast im Bereich der gelenkten Fahrzeugräder der Vorderachse gegenüber den Fahrzeugrädern der hinteren Achse(n) erhöht ist.

Für einen weiteren Vorschlag der Erfindung erfolgt einerseits das Reduzieren des Bremsmoments der zweiten Radbremseinheit und andererseits die Erhöhung des Bremsmoments der dritten und/oder vierten Radbremseinheit schneller als die anschließende (Rück-)Übertragung eines Teils der Bremsmomente der dritten und/oder vierten Radbremseinheit an die zweite Radbremseinheit. So kann für einen Extremfall die Reduzierung und Erhöhung schlagartig erfolgen, um der Erzeugung eines Giermoments bei dem Auftreten des Fehlers der ersten Radbremseinheit möglichst schnell entgegenzuwirken. Hingegen kann anschließend die Übertragung eines Teils der Bremsmomente der dritten und/oder vierten Radbremseinheit allmählich, beispielsweise mit einer ansteigenden Rampenfunktion, an die zweite Radbremseinheit erfolgen. Dies hat zur Folge, dass an der zweiten Radbremseinheit auch mit einer entsprechenden Rampenfunktion ein Giermoment langsam aufgebaut wird. Hierbei kann die Rampenfunktion für die Übertragung so gewählt werden, dass der Fahrer in der Lage ist, durch eine entsprechende Lenkbewegung an den gelenkten Fahrzeugrädern dem entstehenden und sich vergrößernden Giermoment entgegenzuwirken. Alternativ oder kumulativ möglich ist, dass der langsamen Erzeugung des Giermoments in Folge der (Rück-)Übertragung des Teils der Bremsmomente durch ein Stabilitätsprogram, insbesondere in Verbindung mit der Regelung der Bremsmomente der dritten und/oder vierten Radbremseinheit, entgegengewirkt wird.

Möglich ist im Rahmen der Erfindung, dass während der Reduzierung des Bremsmoments der zweiten Radbremseinheit und der Erhöhung der Bremsmomente der dritten und/oder vierten Radbremseinheit eine Berücksichtigung eines Gierwinkels oder einer Gierwinkeländerung des Nutzfahrzeugs erfolgt. Indiziert ein Gierratensensor des Nutzfahrzeugs beispielsweise, dass sich infolge der Reduzierung des Bremsmoments und/oder Erhöhung der Bremsmomente der Gierwinkel ändert, kann dies indizieren, dass das Nutzfahrzeug die vorbestimmte Bahn verlässt und/oder die Gefahr besteht, dass die Bewegung des Nutzfahrzeugs instabil wird. In diesem Fall kann die Reduzierung des Bremsmoments und/oder die Erhöhung der Bremsmomente verlangsamt werden, rückgängig gemacht werden oder sogar überkompensiert werden.

In einem erfindungsgemäßen Verfahren erfolgt bei dem Vorliegen des Fehlerkriteriums, dem Reduzieren des Bremsmoments der zweiten Radbremseinheit und der Erhöhung des Bremsmoments der dritten und/oder vierten Radbremseinheit eine Erhöhung des Bremsmoments an der dritten Radbremseinheit, die in diesem Fall in Längsrichtung des Nutzfahrzeugs hinter der ersten Radbremseinheit (und damit auf derselben Seite des Nutzfahrzeugs) angeordnet ist. Hierbei ist das erhöhte Bremsmoment an der dritten Radbremseinheit größer als das (u. U. ebenfalls erhöhte) Bremsmoment an der vierten Radbremseinheit. Auf diese Weise kann ein infolge der Reduzierung des Bremsmoments an der zweiten Radbremseinheit entstehendes Giermoment zumindest teilweise kompensiert werden.

Für einen Vorschlag der Erfindung berücksichtigt die Reduzierung des Bremsmoments der zweiten Radbremseinheit und/oder die Erhöhung des Bremsmoments der dritten und/oder vierten Radbremseinheit einen Lenkwinkelparameter und/oder eine Lenkbewegung des Fahrers und/oder eines automatisches Lenkungsstrangs. Auf diese Weise kann eine Überlagerung der Reaktionen auf den Ausfall der ersten Radbremseinheit einerseits durch die Lenkbewegung und andererseits durch die asymmetrische Erzeugung von Bremsmomenten an der zweiten Radbremseinheit, der dritten Radbremseinheit und der vierten Radbremseinheit erfolgen.

Möglich ist, dass eine (Rück-)Übertragung des Teils der Bremsmomente der dritten und/oder vierten Radbremseinheit an die zweite Radbremseinheit in Abhängigkeit davon erfolgt, ob und/oder in welchem Ausmaß der Fahrer ein durch die Erhöhung des Bremsmomentes an der zweiten Radbremseinheit entstehendes Giermoment durch eine Lenkbewegung ausgleichen kann. Dies kann im einfachsten Fall durch einen Lenkwinkelsensor erfasst werden: Wird in dem Verfahren festgestellt, dass während der Übertragung eine Veränderung des Lenkwinkelsignals erfolgt, kann darauf geschlossen werden, dass der Fahrer ein entstehendes Giermoment ausgleichen kann oder dieses zumindest versucht. Möglich ist auch eine qualitative Analyse des Lenkwinkelsignals, sodass beispielsweise eine langsame Lenkbewegung als Indiz dafür gewertet wird, dass der Fahrer die Kontrolle hat und die Übertragung der Bremsmomente kompensieren kann, während eine schnellere Lenkbewegung in dem Lenkwinkelsignal oder auch eine hin- und hergehenden Lenkbewegung indizieren kann, dass die Übertragung zu schnell oder in einem zu hohen Ausmaß erfolgt ist.

Möglich ist im Rahmen der Erfindung auch, dass die (Rück-)Übertragung eines Teils der Bremsmomente der dritten und/oder vierten Radbremseinheit an die zweite Radbremseinheit unter Berücksichtigung eines Gierwinkels oder einer Gierwinkeländerung des Nutzfahrzeugs erfolgt. Erfolgt beispielsweise eine (Rück-)Übertragung und ändert sich der Gierwinkel nicht oder nur innerhalb eines vorgegebenen Schwellwerts, kann darauf geschlossen werden, dass das Fahrzeug die Bahn hält und/oder stabil bleibt, sodass eine weitere (Rück-)Übertragung oder (Rück-)Übertragung mit der gewählten Änderungsgeschwindigkeit oder Rampenfunktion erfolgen kann. Ändert sich hingegen der Gierwinkel über einen Schwellwert hinaus, kann dies als Indiz dafür gewertet werden, dass die Übertragung des Teils der Bremsmomente an die zweite Radbremseinheit in zu starkem Ausmaß erfolgt ist oder zu schnell erfolgt ist. Möglich ist auch, dass die (Rück-)Übertragung oder eine hierbei verwendete Rampenfunktion geregelt wird in Abhängigkeit von dem Gierwinkel oder einer Gierwinkeländerung.

Für einen weiteren Vorschlag der Erfindung erfolgt in Abhängigkeit der (Rück) Übertragung eines Teils der Bremsmomente der dritten und/oder vierten Radbremseinheit an die zweite Radbremseinheit eine Veränderung des Verhältnisses der Bremsmomente der dritten und vierten Radbremseinheit derart, dass ein durch die (Rück-)Übertragung hervorgerufenes Giermoment zumindest teilweise durch die Veränderung des Verhältnisses der Radbremsmomente der dritten und vierten Radbremseinheit kompensiert wird. Um diesbezüglich lediglich ein einfaches Beispiel zu nennen, kann bei einer (Rück-)Übertragung eines Bremsmomentes an ein rechtes vorderes gelenktes Fahrzeugrad eine Verteilung der Bremsmomente an die linke dritte und rechte vierte Radbremseinheit so erfolgen, dass sich das Verhältnis der Bremsmomente in Richtung der rechten vierten Radbremseinheit verschiebt, um eine zumindest teilweise Kompensation des Giermoments hervorzurufen.

Für einen weiteren Vorschlag der Erfindung entspricht während des Reduzierens des Bremsmoments der zweiten Radbremseinheit und der Erhöhung der Bremsmomente der dritten und/oder vierten Radbremseinheit und der anschließenden Übertragung eines Teils der Bremsmomente der dritten und/oder vierten Radbremseinheit an die zweite Radbremseinheit die Summe der Bremsmomente einem angeforderten Bremsmoment, so dass tatsächlich die angeforderte Verzögerung des Nutzfahrzeugs herbeigeführt wird. Dies kann davon abhängig gemacht werden, ob tatsächlich eine ausreichende Traktion vorhanden ist, um an den verbleibenden Fahrzeugrädern die angeforderte Summe der Bremsmomente hervorzurufen.

Möglich ist durchaus, dass das zuvor erläuterte Verfahren immer bei dem Auftreten eines Fehlers einer Radbremseinheit eines gelenkten Fahrzeugrads während eines Bremsvorgangs ausgeführt wird. Möglich ist aber auch, dass das Verfahren lediglich für bestimmte Betriebssituationen und Betriebsparameter des Nutzfahrzeugs ausgeführt wird. Möglich ist, dass eine Art Zielkonflikt derart vorliegt: Einerseits kann mit der Ausführung des erfindungsgemäßen Verfahrens und hier insbesondere der Rückübertragung des Bremsmoments an ein gelenktes Fahrzeugrad zwar der Bremsweg verkürzt werden, aber in Kauf genommen werden, dass das Fahrzeug seine vorbestimmte Bahn verlässt und beispielsweise mit einer Fahrbahnbegrenzung oder einem seitlich benachbarten Fahrzeug kollidiert. Hingegen tritt ohne die Rückübertragung des Bremsmoments an ein gelenktes Fahrzeugrad, wie dies beispielsweise gemäß DE 10 2020 131 688 A1 der Fall ist, ein signifikanter Einbruch des gesamten an dem Nutzfahrzeug erzeugten Bremsmoments auf, was letzten Endes zu einer Verlängerung des Bremswegs führen kann, was die Gefahr mit sich bringt, dass das Nutzfahrzeug mit einem davor angeordnetem Fahrzeug oder einer Fahrbahnbegrenzung kollidiert. In diesem Fall ist aber u. U. eher gewährleistet, dass das Fahrzeug seine vorbestimmte Bahn nicht verlässt und keine Kollision mit einer Fahrbahnbegrenzung oder einem seitlich benachbarten Fahrzeug erfolgt.

Diesem Zielkonflikt kann für einen Vorschlag der Erfindung dadurch Rechnung getragen werden, dass in einem Verfahren eine Bremsanforderung und/oder die Umgebungssituation des Nutzfahrzeugs analysiert wird. So kann beispielsweise die Bremsanforderung dahingehend analysiert werden, ob eine Notbremsung vorliegt, was beispielsweise an der Höhe der Bremsanforderung oder der Schnelligkeit des Aufbaus der Bremsanforderung erkannt werden kann. In diesem Fall kann in dem Verfahren gezielt ein Bremsweg-gesteuerter Betriebsmodus aktiviert werden, in dem die Beibehaltung der Fahrtrichtung eine untergeordnete Bedeutung hat und ein möglichst kurzer Bremsweg herbeigeführt wird. Wird hingegen eine Bremsanforderung allmählich aufgebaut oder hat die Bremsanforderung ein geringes Ausmaß, kann darauf geschlossen werden, dass keine kritische Bremssituation vorliegt und der Bremsweg nicht entscheidend ist. In diesem Fall kann in dem Verfahren ein Fahrtrichtung-gesteuerter Betriebsmodus aktiviert werden, in dem vorrangig Sorge dafür getragen wird, dass infolge eines erzeugten Giermoments nicht eine Veränderung der Fahrtrichtung erfolgt oder nicht eine Instabilität erzeugt wird, die die Gefahr einer Kollision in seitlicher Richtung mit sich bringt. Alternativ oder kumulativ kann eine Umgebungssituation des Fahrzeugs analysiert werden. Ergibt diese Analyse, dass sich keine Fahrzeuge neben dem Nutzfahrzeug befinden und/oder ausreichender lateraler Platz vorhanden ist, kann eine Aktivierung des Bremsweg-gesteuerten Betriebsmodus erfolgen, in dem der Bremsweg minimiert wird, aber ein mögliches seitliches Ausbrechen des Nutzfahrzeugs hingenommen werden kann. Der Bremsweg-gesteuerte Betriebsmodus wird auch dann aktiviert, wenn die Analyse der Umgebungssituation ergibt, dass eine große Gefahr einer Kollision mit einem Hindernis oder Fahrzeug besteht, welches sich vor dem Nutzfahrzeug befindet. Ergibt hingegen die Analyse der Umgebungssituation, dass ausreichender Platz vor dem Nutzfahrzeug vorhanden ist, kann der Fahrtrichtung-gesteuerte Betriebsmodus aktiviert werden, in dem mit einer höheren Priorisierung Sorge dafür getragen wird, dass die Fahrtrichtung beibehalten wird oder lediglich eine Veränderung innerhalb vorgegebener Grenzen erfolgt.

In dem Fahrtrichtung-gesteuerten Betriebsmodus erfolgt keine (Rück-)Übertragung eines Teils der Bremsmomente der dritten und/oder vierten Radbremseinheit an die zweite Radbremseinheit. Hingegen erfolgt bei Aktivierung des Bremswegs-gesteuerten Betriebsmodus nach der Reduzierung des Bremsmoments der zweiten Radbremseinheit und der Erhöhung der Bremsmomente der dritten und/oder vierten Radbremseinheit die erläuterte (Rück-)Übertragung eines Teils der Bremsmomente der dritten und/oder vierten Radbremseinheit an die zweite Radbremseinheit.

Die Zeitpunkte, Zeitabstände und Kurvenverläufe für die Reduzierung, die Erhöhung und die Übertragung können im Rahmen der Erfindung beliebig sein. Hierbei können die Zeitpunkte, Zeitabstände und Kurvenverläufe für die Reduzierung, Erhöhung und/oder Übertragung fest vorgegeben sein. Möglich ist aber auch, dass diese abhängig sind von den Betriebs- und/oder Umgebungsparametern. Für einen Vorschlag der Erfindung werden die Verfahrensschritte der Reduzierung, der Erhöhung und der Übertragung in Abhängigkeit von einer Radlastverteilung und/oder einer Bremsanforderung oder einem Bremsmoment einer Radbremseinheit durchgeführt oder nicht durchgeführt oder das Ausmaß der Reduzierung, Erhöhung und/oder der Übertragung hängt von einer Radlastverteilung und/oder einer Bremsanforderung oder einem Bremsmoment einer Radbremseinheit ab. Um lediglich ein nicht beschränkendes Beispiel zu nennen, kann das erfindungsgemäße Verfahren mit der Reduzierung, Erhöhung und Übertragung durchgeführt werden, wenn die Bremsanforderung einen Schwellwert überschreitet, während das Verfahren ansonsten nicht durchgeführt wird oder ansonsten eine Reduzierung, Erhöhung und Übertragung in einem geringeren Ausmaß erfolgt. Ebenfalls möglich ist, dass je nach Höhe der Bremsanforderung die Rückübertragung des Teils des Bremsmoments mit einer unterschiedlichen Rampensteigung erfolgt.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Es versteht sich, dass zahlreiche Änderungen sowie Abwandlungen möglich sind, ohne dass dadurch der durch die Patentansprüche definierte Schutzbereich verlassen wird.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Die in den Patentansprüchen angeführten Merkmale können durch weitere Merkmale ergänzt werden oder die einzigen Merkmale sein, die der Gegenstand des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.

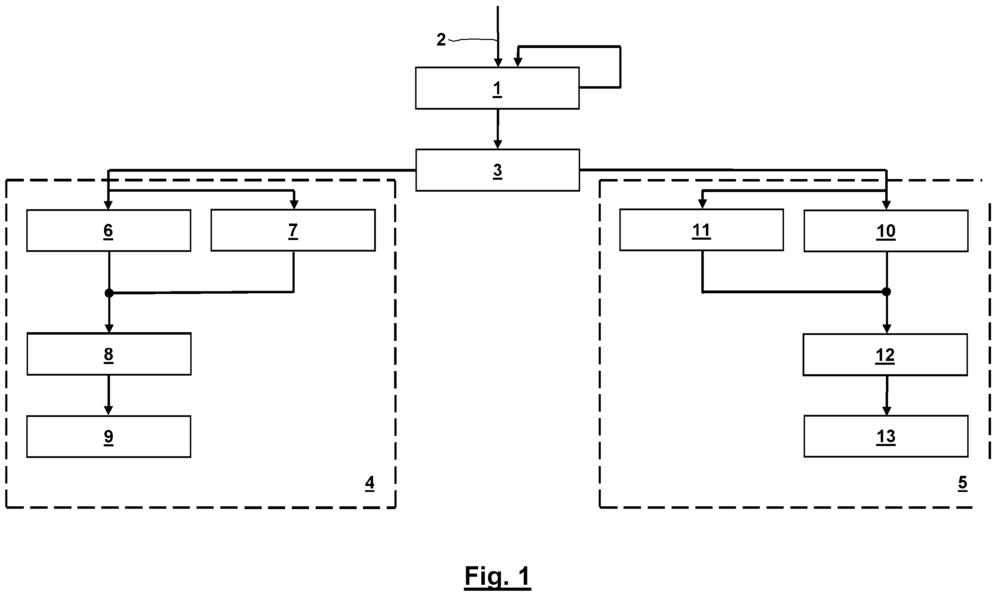

- **Fig. 1**: zeigt stark schematisiert ein Verfahren zur Betätigung von elektronisch gesteuerten Bremsen eines Nutzfahrzeugs.

### FIGURENBESCHREIBUNG

Fig. 1 zeigt schematisch ein Verfahren zur Betätigung von elektronisch gesteuerten Bremsen eines Nutzfahrzeugs.

In einem Verfahrensschritt 1 werden Parameter und Signale 2 bearbeitet, bei welchen es sich bspw. um eine Bremsanforderung von einem Fahrer oder einem autonomen Fahrsystem, Betriebsparameter des Nutzfahrzeugs, Umgebungsparameter, Betriebsgrößen der Radbremseinheiten (wie insbesondere Stellwege, Stellkräfte, Stellwinkel, Stellmomente, Soll- und Istgrö-ßen, elektrische Beaufschlagungssignale (Strom, Spannung) eines elektronischen Aktuators der Radbremseinheiten), Zustandsgrößen u. ä. handeln kann.

In dem Verfahrensschritt 1 erfolgt eine Überwachung eines Fehlerkriteriums, was auch die Überwachung und unter Umständen gewichtete Betrachtung mehrerer Fehlerteilkriterien umfassen kann. Das Fehlerkriterium gibt dabei Aufschluss darüber, ob in einer Radbremseinheit des Bremssystems des Nutzfahrzeugs oder auch in der elektrischen Leistungsversorgung derselben und/oder in der Ansteuerung derselben über Steuerleitungen und/oder in einer Steuereinheit der Radbremseinheit selbst, in einer Steuereinheit einer der Radbremseinheit zugeordneten Achs-Steuereinheit oder in einer zentralen Steuereinheit des Nutzfahrzeugs ein Fehler vorliegt, ein Fehler eine vorbestimmte Wahrscheinlichkeit hat oder indiziert ist, dass zukünftig ein Fehler auftreten wird oder kann. Führt die Überwachung des Fehlerkriteriums dazu, dass das Fehlerkriterium nicht erfüllt ist, wird der normale Betrieb des Bremssystems und der Radbremseinheiten fortgesetzt mit weiterer Überwachung des Fehlerkriteriums.

Führt hingegen die Überwachung des Fehlerkriteriums dazu, dass das Fehlerkriterium erfüllt ist, wird ein Verfahrensschritt 3 ausgeführt. In dem Verfahrensschritt 3 erfolgt die Entscheidung, ob ein Fahrtrichtung-gesteuerter Betriebsmodus 4 oder ein Bremsweg-gesteuerter Betriebsmodus 5 ausgeführt wird. Hierzu wird in dem Verfahrensschritt 3 analysiert, ob der Beibehaltung der vorbestimmten Bahn des Nutzfahrzeugs oder der Gewährleistung eines kurzen Bremswegs Priorität einzuräumen ist. Als Kriterium hierfür kann beispielsweise die Stärke einer Bremsanforderung durch den Fahrer oder durch ein autonomes Fahrsystem oder eine Anstiegsgeschwindigkeit der Bremsanforderung herangezogen werden. Liegt eine schnelle Bremsanforderung vor oder indiziert die Bremsanforderung angesichts des Überschreitens eines Schwellwerts, dass eine schnelle Bremsung oder sogar eine Notbremsung gewünscht ist, wird in dem Verfahrensschritt 3 der Bremsweg-gesteuerte Betriebsmodus 5 ausgelöst. Dasselbe kann gelten, wenn über die Analyse der Sensoren, die die Umgebung erfassen, festgestellt wird, dass die Gefahr mit einer Kollision mit einem vor dem Nutzfahrzeug angeordneten Hindernis, insbesondere einem Fahrzeug, einer Fahrbahnbegrenzung, einem Fußgänger oder Radfahrer oder einem Gebäude, besteht. Ist andernfalls der Bremsweg nicht von entscheidender Bedeutung und beispielsweise die Bremsanforderung sehr langsam aufgebaut oder unterhalb eines Schwellwerts, kann eine Auswahl des Fahrtrichtung-gesteuertem Betriebsmodus 4 in dem Verfahrensschritt 3 erfolgen.

In dem Fahrtrichtung-gesteuertem Betriebsmodus 4 erfolgt in einem Verfahrensschritt 6 eine Reduzierung des Bremsmoments der zweiten Radbremseinheit, die vorzugsweise der Reduzierung des Bremsmoments der ersten Radbremseinheit in Folge des Fehlers entspricht, aber auch kleiner oder größer kann sein als diese.

Unter Umständen erfolgt in einem optionalen Verfahrensschritt 7 gleichzeitig eine Reduzierung eines etwaigen, trotz des Fehlers noch von der ersten Radbremseinheit erzeugten Bremsmoments, insbesondere bis auf Null.

In einem Verfahrensschritt 8 erfolgt dann eine Erhöhung der Bremsmomente der dritten und/oder vierten Radbremseinheit, wobei vorzugsweise diese Bremsmomente soweit erhöht werden, dass die dritte und/oder vierte Radbremseinheit die reduzierten Bremsmomente der ersten und zweiten Radbremseinheit übernehmen, sodass das Gesamt-Bremsmoment gleich bleibt. Das Gesamt-Bremsmoment kann sich aber auch verringern oder vergrößern.

Für eine erste, in Fig. 1 nicht dargestellte Variante bleibt dieser Zustand während der weiteren Bremsung erhalten, so dass keine (Rück-)Übertragung eines Teils der Bremsmomente der dritten und/oder vierten Radbremseinheit an die zweite Radbremseinheit erfolgt. Für eine zweite, in Fig. 1 dargestellte Variante erfolgt aber anschließend in einem Verfahrensschritt 9 eine (Rück-) Übertragung des Bremsmoments der dritten und/oder vierten Radbremseinheit an die zweite Radbremseinheit, wobei diese Übertragung mit einer Rampenfunktion mit gradlinigem oder beliebigem kurvenförmigem Rampenverlauf erfolgt. Hierbei ist die Steigung der Rampe abhängig davon, dass die Fahrstabilität weiter gewährleistet ist, eine vorbestimmte Bahn innerhalb vorgegebener Grenzen beibehalten wird oder der Fahrer oder ein autonomes Fahrsystem durch geeignete Lenkeingriffe einem etwaigen, in Folge der Rückübertragung entstehenden Giermoment entgegen wirken kann. Möglich ist auch, dass in dem Verfahrensschritt 9 eine Rückübertragung der Bremsmomente an die zweite Radbremseinheit unter Berücksichtigung eines Lenkeingriffs durch den Fahrer oder ein autonomes Fahrsystem oder unter Regelung mit einer Berücksichtigung des Gierwinkels oder einer Gierwinkeländerung erfolgt.

Erfolgt hingegen in dem Verfahrensschritt 3 eine Aktivierung des Bremsweg-gesteuerten Betriebsmodus 5, erfolgt (grundsätzlich dem Fahrtrichtung-gesteuertem Betriebsmodus 4 zunächst entsprechend) in einem Verfahrensschritt 10 eine Reduzierung des Bremsmoments der zweiten Radbremseinheit, wobei optional auch in einem parallelen Verfahrensschritt 11 eine Reduzierung eines etwaigen, trotz des Fehlers verbliebenen Radbremsmoments der ersten Radbremseinheit erfolgen kann. Es erfolgt dann auch in einem Verfahrensschritt 12 eine Erhöhung der Bremsmomente der dritten und/oder vierten Radbremseinheit, wobei für das Ausmaß der Erhöhung das zu dem Verfahrensschritt 8 Gesagte entsprechend gilt. Anschließend erfolgt dann in einem Verfahrensschritt 13 eine (Rück-)Übertragung eines Teils der Bremsmomente der dritten und/oder vierten Radbremseinheit an die zweite Radbremseinheit, wobei (abweichend zu dem Verfahrensschritt 9) nun akzeptiert werden kann, dass eine vorbestimmte Bahn verlassen wird, eine Gierwinkeländerung auftritt u. ä. Vorzugsweise erfolgt die Rückübertragung in dem Verfahrensschritt 13 schneller als in dem Verfahrensschritt 9.

Für eine alternative Ausgestaltung des Bremsweg-gesteuerten Betriebsmodus 5 erfolgt keine Reduzierung des Bremsmoments der zweiten Radbremseinheit. In diesem Fall erfolgt lediglich eine zumindest teilweise Übertragung des Bremsmoments der ersten Radbremseinheit an die zweite Radbremseinheit und/oder die weiteren Radbremseinheiten.

Vorzugsweise erfolgt die Ausführung der Verfahrensschritte 6, 7, 8 bzw. 10, 11, 12 schneller als die Ausführung des Verfahrensschritts 9 bzw. 13. Hierbei werden vorzugsweise die Verfahrensschritte 6, 7, 8 bzw. 10, 11, 12 so schnell wie möglich ausgeführt.

### BEZUGSZEICHENLISTE

- 1: Verfahrensschritt
- 2: Signal, Betriebsparameter und/oder Umgebungsparameter
- 3: Verfahrensschritt
- 4: Fahrtrichtung-gesteuerter Betriebsmodus
- 5: Bremsweg-gesteuerter Betriebsmodus
- 6: Verfahrensschritt
- 7: Verfahrensschritt
- 8: Verfahrensschritt
- 9: Verfahrensschritt
- 10: Verfahrensschritt
- 11: Verfahrensschritt
- 12: Verfahrensschritt
- 13: Verfahrensschritt

## Patentansprüche

1. Verfahren zur Betätigung von elektronisch gesteuerten Bremsen eines Nutzfahrzeugs mit einer ersten Radbremseinheit und einer zweiten Radbremseinheit, die gelenkten Fahrzeugrädern einer Vorderachse zugeordnet sind, und einer dritten Radbremseinheit und einer vierten Radbremseinheit, die Fahrzeugrädern mindestens einer anderen Achse zugeordnet sind, mit folgenden Verfahrensschritten:
a) Überwachen eines Fehlerkriteriums (1) für den Betrieb der ersten Radbremseinheit;
b) bei Vorliegen des Fehlerkriteriums der ersten Radbremseinheit wird mindestens ein Bremsmoment der zweiten Radbremseinheit und/oder dritten Radbremseinheit und/oder vierten Radbremseinheit derart gesteuert oder geregelt, dass ein eine Betriebsanforderung gewährleistender Gierwinkelparameter erzeugt wird, und
wobei bei Vorliegen des Fehlerkriteriums das Bremsmoment der zweiten Radbremseinheit reduziert (6, 10) wird und das Bremsmoment der dritten und/oder vierten Radbremseinheit erhöht wird (8, 12),
**dadurch gekennzeichnet, dass**
anschließend das Bremsmoment der dritten und/oder vierten Radbremseinheit reduziert (9, 13) wird.

2. Verfahren zur Betätigung von elektronisch gesteuerten Bremsen eines Nutzfahrzeugs mit einer ersten Radbremseinheit und einer zweiten Radbremseinheit, die gelenkten Fahrzeugrädern einer Vorderachse zugeordnet sind, und einer dritten Radbremseinheit und einer vierten Radbremseinheit, die Fahrzeugrädern mindestens einer anderen Achse zugeordnet sind, insbesondere Verfahren nach Anspruch 1, mit folgenden Verfahrensschritten:
a) Überwachen eines Fehlerkriteriums (1) für den Betrieb der ersten Radbremseinheit;
b) bei Vorliegen des Fehlerkriteriums der ersten Radbremseinheit wird ein automatisch betätigbarer Lenkungsstrang derart gesteuert oder geregelt, dass ein eine Betriebsanforderung gewährleistender Lenkwinkelparameter erzeugt wird, und
wobei bei Vorliegen des Fehlerkriteriums das Bremsmoment der zweiten Radbremseinheit reduziert (6, 10) wird und das Bremsmoment der dritten und/oder vierten Radbremseinheit erhöht (8, 12) wird,
**dadurch gekennzeichnet, dass**
anschließend das Bremsmoment der dritten und/oder vierten Radbremseinheit reduziert (9, 13) wird.

3. Verfahren nach Anspruch 1 oder 2, **dadurch gekennzeichnet, dass** anschließend das Bremsmoment der zweiten Radbremseinheit erhöht (9, 13) wird.

4. Verfahren nach Anspruch 3, **dadurch gekennzeichnet, dass** ein Teil des Bremsmoments der dritten und/oder vierten Radbremseinheit an die zweite Radbremseinheit übertragen (9, 13) wird.

5. Verfahren nach Anspruch 4, **dadurch gekennzeichnet, dass** das Reduzieren (6, 10) des Bremsmoments der zweiten Radbremseinheit und die Erhöhung der Bremsmomente (8, 12) der dritten und/oder vierten Radbremseinheit schneller erfolgt als die anschließende Übertragung (9, 13) eines Teils der Bremsmomente der dritten und/oder vierten Radbremseinheit an die zweite Radbremseinheit.

6. Verfahren nach einem der vorhergehenden Ansprüche, **dadurch gekennzeichnet, dass** das Reduzieren (6, 10) des Bremsmoments der zweiten Radbremseinheit und die Erhöhung der Bremsmomente (8, 12) der dritten und/oder vierten Radbremseinheit unter Berücksichtigung des Gierwinkelparameters des Nutzfahrzeugs erfolgt.

7. Verfahren nach einem der Ansprüche 1 bis 6, **dadurch gekennzeichnet, dass** das Bremsmoment an der dritten Radbremseinheit, die in Längsrichtung des Nutzfahrzeugs hinter der ersten Radbremseinheit angeordnet ist, erhöht wird, wobei das erhöhte Bremsmoment an der dritten Radbremseinheit größer ist als an der vierten Radbremseinheit.

8. Verfahren nach einem der vorhergehenden Ansprüche, **dadurch gekennzeichnet, dass** die Reduzierung (6, 10) des Bremsmoments der zweiten Radbremseinheit und/oder die Erhöhung (8, 12) des Bremsmoments der dritten und/oder vierten Radbremseinheit in Abhängigkeit eines Lenkwinkelparameters und/oder einer Lenkbewegung des Fahrers und/oder eines automatisch betätigbaren Lenkungsstrangs erfolgt.

9. Verfahren nach Anspruch 4 oder 5, **dadurch gekennzeichnet, dass** die Übertragung (9, 13) eines Teils der Bremsmomente der dritten und/oder vierten Radbremseinheit an die zweite Radbremseinheit unter Berücksichtigung des Gierwinkelparameters des Nutzfahrzeugs erfolgt.

10. Verfahren nach einem der Ansprüche 4, 5 oder 9, **dadurch gekennzeichnet, dass** in Abhängigkeit der Übertragung (9, 13) eines Teils der Bremsmomente der dritten und/oder vierten Radbremseinheit an die zweite Radbremseinheit eine Veränderung des Verhältnisses der Bremsmomente der dritten und vierten Radbremseinheiten derart erfolgt, dass ein durch die Übertragung (9, 13) des Teils der Bremsmomente der dritten und/oder vierten Radbremseinheit an die zweite Radbremseinheit hervorgerufenes Giermoment zumindest teilweise durch die Veränderung des Verhältnisses der Bremsmomente der dritten und vierten Radbremseinheiten kompensiert wird.

11. Verfahren nach einem der Ansprüche 4, 5, 9 oder 10, **dadurch gekennzeichnet, dass** während des Reduzierens (6, 11) des Bremsmoments der zweiten Radbremseinheit und der Erhöhung der Bremsmomente (8, 12) der dritten und/oder vierten Radbremseinheit und der anschließenden Übertragung (9, 13) eines Teils der Bremsmomente der dritten und/oder vierten Radbremseinheit an die zweite Radbremseinheit die Summe der Bremsmomente einem angeforderten Bremsmoment entspricht oder mindestens so groß ist wie ein von dem angeforderten Bremsmoment abhängiges Schwellenwert-Bremsmoment.

12. Verfahren nach einem der Ansprüche 4, 5, 9, 10 oder 11, **dadurch gekennzeichnet, dass** in Abhängigkeit von der Bremsanforderung und/oder der Umgebungssituation des Nutzfahrzeugs
a) ein Bremsweg-gesteuerter Betriebsmodus (5) aktiviert wird, in dem
aa) bei Vorliegen des Fehlerkriteriums der ersten Radbremseinheit das Bremsmoments der zweiten Radbremseinheit reduziert (10) wird und die Bremsmomente der dritten und/oder vierten Radbremseinheit erhöht (12) werden und anschließend eine Übertragung (13) eines Teils der Bremsmomente der dritten und/oder vierten Radbremseinheit an die zweite Radbremseinheit erfolgt oder
ab) bei Vorliegen des Fehlerkriteriums der ersten Radbremseinheit das Bremsmoment der ersten Radbremseinheit zumindest teilweise auf die anderen Radbremseinheiten verteilt wird, oder
b) ein Fahrtrichtung-gesteuerter Betriebsmodus (4) aktiviert wird, in dem bei Vorliegen des Fehlerkriteriums der ersten Radbremseinheit das Bremsmoments der zweiten Radbremseinheit reduziert (6) wird und die Bremsmomente der dritten und/oder vierten Radbremseinheit erhöht (8) werden,
ba) aber anschließend keine Übertragung eines Teils der Bremsmomente der dritten und/oder vierten Radbremseinheit an die zweite Radbremseinheit erfolgt oder
bb) anschließend eine Übertragung (9) eines Teils der Bremsmomente der dritten und/oder vierten Radbremseinheit an die zweite Radbremseinheit mit einer Rampenfunktion oder unter einer Reglung unter Berücksichtigung eines Lenkungseingriffes des Fahrers oder eines automatisch betätigbaren Lenkungsstrangs oder eines Gierwinkelparameters erfolgt.

13. Verfahren nach einem der Ansprüche 4, 5 und 9 bis 12, **dadurch gekennzeichnet, dass** bei Vorliegen des Fehlerkriteriums der ersten Radbremseinheit die Verfahrensschritte, dass das Bremsmoment der zweiten Radbremseinheit reduziert (6, 10) wird und die Bremsmomente der dritten und/oder vierten Radbremseinheit erhöht (8, 12) werden und anschließend einer Übertragung (9, 13) eines Teils der Bremsmomente der dritten und/oder vierten Radbremseinheit an die zweite Radbremseinheit erfolgt, in Abhängigkeit von einer Radlastverteilung und/oder einer Bremsanforderung oder einem Bremsmoment einer Radbremseinheit durchgeführt oder nicht durchgeführt werden oder das Ausmaß der Reduzierung (6, 11), Erhöhung (8, 12) und/oder der Übertragung (9, 12) von einer Radlastverteilung und/oder einer Bremsanforderung oder einem Bremsmoment einer Radbremseinheit abhängt.

## Claims

1. Method for actuating electronically controlled brakes of a commercial vehicle with a first wheel brake unit and a second wheel brake unit associated with the steered wheels of a front axle, and a third wheel brake unit and a fourth wheel brake unit associated with the wheels of at least one other axle, with the following method steps:
a) Monitoring a fault criterion (1) for the operation of the first wheel brake unit;
b) if the fault criterion for the first wheel brake unit is present, at least one braking torque of the second wheel brake unit and/or third wheel brake unit and/or fourth wheel brake unit is controlled or regulated in such a way that a yaw angle parameter ensuring an operational requirement is generated, and
wherein, when the fault criterion is present, the braking torque of the second wheel brake unit is reduced (6, 10) and the braking torque of the third and/or fourth wheel brake unit is increased (8, 12),
**characterized in that**
subsequently, the braking torque of the third and/or fourth wheel brake unit is reduced (9, 13).

2. Method for actuating electronically controlled brakes of a commercial vehicle with a first wheel brake unit and a second wheel brake unit associated with the steered wheels of a front axle, and a third wheel brake unit and a fourth wheel brake unit associated with the wheels of at least one other axle, in particular the method according to claim 1, with the following method steps:
a) Monitoring a fault criterion (1) for the operation of the first wheel brake unit;
b) if the fault criterion for the first wheel brake unit is present, an automatically actuable steering system is controlled or regulated such that a steering angle parameter ensuring an operational requirement is generated, and
wherein, when the fault criterion is present, the braking torque of the second wheel brake unit is reduced (6, 10) and the braking torque of the third and/or fourth wheel brake unit is increased (8, 12),
**characterized in that**
subsequently, the braking torque of the third and/or fourth wheel brake unit is reduced (9, 13).

3. Method according to claim 1 or 2, **characterized in that** the braking torque of the second wheel brake unit is subsequently increased (9, 13).

4. Method according to claim 3, **characterized in that** a portion of the braking torque of the third and/or fourth wheel brake unit is transferred (9, 13) to the second wheel brake unit.

5. Method according to claim 4, **characterized in that** the reduction (6, 10) of the braking torque of the second wheel brake unit and the increase in the braking torques (8, 12) of the third and/or fourth wheel brake unit occur more quickly than the subsequent transfer (9, 13) of a portion of the braking torques of the third and/or fourth wheel brake unit to the second wheel brake unit.

6. Method according to any one of the preceding claims, **characterized in that** the reduction (6, 10) of the braking torque of the second wheel brake unit and the increase in the braking torques (8, 12) of the third and/or fourth wheel brake unit take place while taking into account the yaw angle parameter of the commercial vehicle.

7. Method according to any one of claims 1 to 6, **characterized in that** the braking torque at the third wheel brake unit, which is arranged behind the first wheel brake unit in the longitudinal direction of the commercial vehicle, is increased, wherein the increased braking torque at the third wheel brake unit is greater than that at the fourth wheel brake unit.

8. Method according to any one of the preceding claims, **characterized in that** the reduction (6, 10) of the braking torque of the second wheel brake unit and/or the increase (8, 12) of the braking torque of the third and/or fourth wheel brake unit is performed as a function of a steering angle parameter and/or a steering movement by the driver and/or an automatically actuated steering system.

9. Method according to claim 4 or 5, **characterized in that** the transfer (9, 13) of a portion of the braking torques of the third and/or fourth wheel brake unit to the second wheel brake unit takes place while taking into account the yaw angle parameter of the commercial vehicle.

10. Method according to any one of claims 4, 5, or 9, **characterized in that**, depending on the transfer (9, 13) of a portion of the braking torques of the third and/or fourth wheel brake units to the second wheel brake unit, the ratio of the braking torques of the third and fourth wheel brake units is adjusted such that a yaw moment caused by the transfer (9, 13) of a portion of the braking torques of the third and/or fourth wheel brake units to the second wheel brake unit is at least partially compensated by the change in the ratio of the braking torques of the third and fourth wheel brake units.

11. Method according to any one of claims 4, 5, 9, or 10, **characterized in that**, during the reduction (6, 11) of the braking torque of the second wheel brake unit and the increase in the braking torques (8, 12) of the third and/or fourth wheel brake units, and the subsequent transfer (9, 13) of a portion of the braking torques of the third and/or fourth wheel braking units to the second wheel braking unit, the sum of the braking torques corresponds to a requested braking torque or is at least as large as a threshold braking torque dependent on the requested braking torque.

12. Method according to any one of claims 4, 5, 9, 10, or 11, **characterized in that**, depending on the braking demand and/or the environmental conditions of the commercial vehicle,
a) a braking distance-controlled operating mode (5) is activated, in which
aa) if the fault criterion of the first wheel brake unit is present, the braking torque of the second wheel brake unit is reduced (10) and the braking torques of the third and/or fourth wheel brake units are increased (12), and subsequently a transfer (13) of a portion of the braking torques of the third and/or fourth wheel brake units to the second wheel brake unit takes place, or
ab) if the fault criterion for the first wheel brake unit is present, the braking torque of the first wheel brake unit is distributed, at least in part, to the other wheel brake units, or
b) a direction-of-travel-controlled operating mode (4) is activated, in which, if the fault criterion of the first wheel brake unit is present, the braking torque of the second wheel brake unit is reduced (6) and the braking torques of the third and/or fourth wheel brake units are increased (8),
ba) but subsequently, no portion of the braking torques of the third and/or fourth wheel brake units is transferred to the second wheel brake unit, or
bb) subsequently, a transfer (9) of a portion of the braking torques from the third and/or fourth wheel brake units to the second wheel brake unit takes place using a ramp function or under control that takes into account the driver's steering input, an automatically actuated steering system, or a yaw angle parameter.

13. Method according to any one of claims 4, 5, and 9 to 12, **characterized in that**, upon occurrence of the fault criterion of the first wheel brake unit, the method steps of reducing (6, 10) the braking torque of the second wheel brake unit and increasing (8, 12) the braking torques of the third and/or fourth wheel brake units, and subsequently a transfer (9, 13) of a portion of the braking torques of the third and/or fourth wheel brake units to the second wheel brake unit takes place, are performed or not performed depending on a wheel load distribution and/or a braking demand or a braking torque of a wheel brake unit, or the extent of the reduction (6, 11), increase (8, 12), and/or the transfer (9, 12) may depend on a wheel load distribution and/or a braking request or a braking torque of a wheel brake unit.

## Revendications

1. Procédé d'actionnement des freins à commande électronique d'un véhicule utilitaire, comprenant une première unité de freinage de roue et une deuxième unité de freinage de roue qui sont associées aux roues directrices d'un essieu avant, ainsi qu'une troisième unité de freinage de roue et une quatrième unité de freinage de roue qui sont associées aux roues d'au moins un autre essieu, comprenant les étapes suivantes consistant à :
a) surveiller un critère de défaut (1) relatif au fonctionnement de la première unité de freinage de roue ;
b) en cas de présence du critère de défaut de la première unité de freinage de roue, commander ou réguler au moins un couple de freinage de la deuxième unité de freinage de roue et/ou de la troisième unité de freinage de roue et/ou de la quatrième unité de freinage de roue, de manière à générer un paramètre d'angle de lacet qui satisfait à une exigence de fonctionnement, et
en cas de présence du critère de défaut, réduire le couple de freinage de la deuxième unité de freinage de roue (6, 10), et augmenter le couple de freinage de la troisième et/ou de la quatrième unité de freinage de roue (8, 12),
**caractérisé en ce que**
ensuite, le couple de freinage de la troisième et/ou de la quatrième unité de freinage de roue est réduit (9, 13).

2. Procédé d'actionnement des freins à commande électronique d'un véhicule utilitaire, comprenant une première unité de freinage de roue et une deuxième unité de freinage de roue qui sont associées aux roues directrices d'un essieu avant, ainsi qu'une troisième unité de freinage de roue et une quatrième unité de freinage de roue qui sont associées à des roues d'au moins un autre essieu, en particulier procédé selon la revendication 1, comprenant les étapes suivantes consistant à :
a) surveiller un critère de défaut (1) relatif au fonctionnement de la première unité de freinage de roue ;
b) en cas de présence du critère de défaut de la première unité de freinage de roue, commander ou réguler un système de direction à actionnement automatique, de manière à générer un paramètre d'angle de braquage qui satisfait à une exigence de fonctionnement, et
en cas de présence du critère de défaut, réduire le couple de freinage de la deuxième unité de freinage de roue (6, 10) et augmenter le couple de freinage de la troisième et/ou de la quatrième unité de freinage de roue (8, 12),
**caractérisé en ce que**
ensuite, le couple de freinage de la troisième et/ou de la quatrième unité de freinage de roue est réduit (9, 13).

3. Procédé selon la revendication 1 ou 2,
**caractérisé en ce qu'**ensuite, le couple de freinage de la deuxième unité de freinage de roue est augmenté (9, 13).

4. Procédé selon la revendication 3,
**caractérisé en ce qu'**une partie du couple de freinage de la troisième et/ou de la quatrième unité de freinage de roue est transférée (9, 13) vers la deuxième unité de freinage de roue.

5. Procédé selon la revendication 4,
**caractérisé en ce que** la réduction (6, 10) du couple de freinage de la deuxième unité de freinage de roue et l'augmentation des couples de freinage (8, 12) de la troisième et/ou de la quatrième unité de freinage de roue s'effectuent plus rapidement que le transfert (9, 13) qui s'ensuit d'une partie des couples de freinage de la troisième et/ou de la quatrième unité de freinage de roue vers la deuxième unité de freinage de roue.

6. Procédé selon l'une des revendications précédentes,
**caractérisé en ce que** la réduction (6, 10) du couple de freinage de la deuxième unité de freinage de roue et l'augmentation des couples de freinage (8, 12) de la troisième et/ou de la quatrième unité de freinage de roue s'effectuent en tenant compte du paramètre d'angle de lacet du véhicule utilitaire.

7. Procédé selon l'une des revendications 1 à 6,
**caractérisé en ce que** le couple de freinage au niveau de la troisième unité de freinage de roue, disposée derrière la première unité de freinage de roue dans le sens longitudinal du véhicule utilitaire, est augmenté, sachant que le couple de freinage augmenté au niveau de la troisième unité de freinage de roue est supérieur à celui au niveau de la quatrième unité de freinage de roue.

8. Procédé selon l'une des revendications précédentes,
**caractérisé en ce que** la réduction (6, 10) du couple de freinage de la deuxième unité de freinage de roue et/ou l'augmentation (8, 12) du couple de freinage de la troisième et/ou de la quatrième unité de freinage de roue s'effectuent en fonction d'un paramètre d'angle de braquage et/ou d'un mouvement de braquage du conducteur et/ou d'un système de direction à actionnement automatique.

9. Procédé selon la revendication 4 ou 5,
**caractérisé en ce que** le transfert (9, 13) d'une partie des couples de freinage de la troisième et/ou de la quatrième unité de freinage de roue vers la deuxième unité de freinage de roue s'effectue en tenant compte du paramètre d'angle de lacet du véhicule utilitaire.

10. Procédé selon l'une des revendications 4, 5 ou 9,
**caractérisé en ce que**, en fonction du transfert (9, 13) d'une partie des couples de freinage de la troisième et/ou de la quatrième unité de freinage de roue vers la deuxième unité de freinage de roue, une modification du rapport entre les couples de freinage des troisième et quatrième unités de freinage de roue s'effectue de telle sorte qu'un couple de lacet provoqué par le transfert (9, 13) d'une partie des couples de freinage de la troisième et/ou de la quatrième unité de freinage de roue vers la deuxième unité de freinage de roue soit au moins partiellement compensé par la modification du rapport entre les couples de freinage des troisième et quatrième unités de freinage de roue.

11. Procédé selon l'une des revendications 4, 5, 9 ou 10,
**caractérisé en ce que**, pendant la réduction (6, 11) du couple de freinage de la deuxième unité de freinage de roue et pendant l'augmentation des couples de freinage (8, 12) de la troisième et/ou de la quatrième unité de freinage de roue, puis le transfert (9, 13) d'une partie des couples de freinage de la troisième et/ou de la quatrième unité de freinage de roue vers la deuxième unité de freinage de roue, la somme des couples de freinage correspond à un couple de freinage exigé ou est au moins égale à un couple de freinage seuil dépendant du couple de freinage exigé.

12. Procédé selon l'une des revendications 4, 5, 9, 10 ou 11,
**caractérisé en ce que**, en fonction de l'exigence de freinage et/ou de la situation environnementale du véhicule utilitaire,
a) un mode de fonctionnement commandé en fonction de la distance de freinage (5) est activé, dans lequel
aa) en cas de présence du critère de défaut de la première unité de freinage de roue, le couple de freinage de la deuxième unité de freinage de roue est réduit (10) et les couples de freinage de la troisième et/ou de la quatrième unité de freinage de roue sont augmentés (12), ce qui est suivi d'un transfert (13) d'une partie des couples de freinage de la troisième et/ou de la quatrième unité de freinage de roue vers la deuxième unité de freinage de roue, ou
ab) en cas de présence du critère de défaut de la première unité de freinage de roue, le couple de freinage de la première unité de freinage de roue est réparti, au moins en partie, sur les autres unités de freinage de roue, et/ou
b) un mode de fonctionnement commandé en fonction du sens de déplacement (4) est activé, dans lequel, en cas de présence du critère de défaut de la première unité de freinage de roue, le couple de freinage de la deuxième unité de freinage de roue est réduit (6) et les couples de freinage de la troisième et/ou de la quatrième unité de freinage de roue sont augmentés (8),
ba) mais ensuite, il n'y a pas de transfert d'une partie des couples de freinage de la troisième et/ou de la quatrième unité de freinage de roue vers la deuxième unité de freinage de roue, ou
bb) ensuite, un transfert (9) d'une partie des couples de freinage de la troisième et/ou de la quatrième unité de freinage de roue vers la deuxième unité de freinage de roue s'effectue selon une fonction en rampe ou sous régulation tenant compte d'une intervention du conducteur sur la direction, d'un système de direction à actionnement automatique ou d'un paramètre d'angle de lacet.

13. Procédé selon l'une des revendications 4, 5 et 9 à 12,
**caractérisé en ce que**, en cas de présence du critère de défaut de la première unité de freinage de roue, les étapes du procédé consistant à réduire (6, 10) le couple de freinage de la deuxième unité de freinage de roue et à augmenter (8, 12) les couples de freinage de la troisième et/ou de la quatrième unité de freinage de roue, et, ensuite, à transférer (9, 13) une partie des couples de freinage de la troisième et/ou de la quatrième unité de freinage de roue vers la deuxième unité de freinage de roue, sont mises en œuvre ou non en fonction d'une répartition de la charge sur les roues et/ou d'une exigence de freinage ou d'un couple de freinage d'une unité de freinage de roue, ou bien l'ampleur de la réduction (6, 11), de l'augmentation (8, 12) et/ou du transfert (9, 12) dépend d'une répartition de la charge sur les roues et/ou d'une exigence de freinage ou d'un couple de freinage d'une unité de freinage de roue.
